# EUROPEAN PATENT APPLICATION

(11) **EP 4 528 969 A1**
(43) Date of publication of application: **26.03.2025**
(21) Application number: 23199187.8
(22) Date of filing: 22.09.2023
(51) Int. Cl.: H02J 7/00, H02J 50/80, H04B 5/79

(54) **WIRELESS POWER TRANSFER SYSTEM**

(71) Applicant: Koninklijke Philips N.V., 5656 AG Eindhoven (NL)
(72) Inventor: LEBENS, Pascal Leonard Maria Theodoor, 5656AG Eindhoven (NL); DRAAK, Johannes Wilhelmus, 5656AG Eindhoven (NL); AGAFONOV, Aleksei, 5656AG Eindhoven (NL)
(74) Representative: Philips Intellectual Property & Standards

(57) **Abstract**

A power transmitter (101) wirelessly provides power to a power receiver (105) via a power transfer signal. During power transfer, a driver (201) generates the power transfer signal to employ a repeating time frame comprising a power transfer time interval and a communication time interval in which the power transfer signal is off. A communication driver (209) generates a communication drive signal for a communication coil (207) to generate a communication carrier signal. Communication between the power transmitter and the power receiver is by modulation of the communication carrier signal during the communication time intervals. A determiner (211) determines a power extraction indication indicative of a power extraction property for extraction of power from the communication carrier signal by the power receiver during at least part of the communication time intervals and a level controller (211) controls a level of the communication drive signal during communication time intervals in dependence on the power extraction indication.

## Description

### FIELD OF THE INVENTION

The invention relates to operation of a wireless power transfer system.

### BACKGROUND OF THE INVENTION

Most present-day electrical products require a dedicated electrical contact in order to be powered from an external power supply. However, this tends to be impractical and requires the user to physically insert connectors or otherwise establish a physical electrical contact. Typically, power requirements also differ significantly, and currently most devices are provided with their own dedicated power supply resulting in a typical user having a large number of different power supplies with each power supply being dedicated to a specific device. Although, the use of internal batteries may avoid the need for a wired connection to a power supply during use, this only provides a partial solution as the batteries will need recharging (or replacing). The use of batteries may also add substantially to the weight and potentially cost and size of the devices.

In order to provide a significantly improved user experience, it has been proposed to use a wireless power supply where power is inductively transferred from a transmitter inductor in a power transmitter device to a receiver coil in the individual devices.

Power transmission via magnetic induction is a well-known concept, mostly applied in transformers having a tight coupling between a primary transmitter inductor/coil and a secondary receiver coil. By separating the primary transmitter coil and the secondary receiver coil between two devices, wireless power transfer between these becomes possible based on the principle of a loosely coupled transformer.

Such an arrangement allows a wireless power transfer to the device without requiring any wires or physical electrical connections to be made. Indeed, it may simply allow a device to be placed adjacent to, or on top of, the transmitter coil in order to be recharged or powered externally. For example, power transmitter devices may be arranged with a horizontal surface on which a device can simply be placed in order to be powered.

Furthermore, such wireless power transfer arrangements may advantageously be designed such that the power transmitter device can be used with a range of power receiver devices. In particular, a wireless power transfer approach, known as the Qi Specifications, has been defined and is currently being developed further. This approach allows power transmitter devices that meet the Qi Specifications to be used with power receiver devices that also meet the Qi Specifications without these having to be from the same manufacturer or having to be dedicated to each other. The Qi standard further includes some functionality for allowing the operation to be adapted to the specific power receiver device (e.g. dependent on the specific power drain).

The Qi Specification is developed by the Wireless Power Consortium and more information can e.g. be found on their website: http://www.wirelesspowerconsortium.com/index.html, where in particular the defined Specification documents can be found.

The Wireless Power Consortium has on the basis of the Qi Specification proceeded to develop the Ki Specification (also known as the Cordless Kitchen Specification) which is aimed at providing safe, reliable, and efficient wireless power transfer to kitchen appliances. Ki supports much higher power levels up to 2.5KW.

In many systems, such as specifically Qi systems, communication from the power receiver to the power transmitter may use load modulation where a load of the power transfer signal is varied in dependence on the data to be transmitted. However, such load modulation may be difficult to detect if the power transfer loading of the power transfer signal varies at the same time. Similarly, communication from the power transmitter to the power receiver may be achieved by modulating the power transfer signal (e.g. amplitude or frequency modulation) but interference to such modulation may be caused by variations in the parameters of the power transfer signal due to e.g. a varying load.

In some systems it has accordingly been proposed to use a completely separate communication approach. Specifically, Ki wireless power transfer systems may establish a two way communication link using the Near Field Communication, NFC, standard. The communication is during the power transfer phase performed in short time intervals in order to avoid or reduce interference between the power transfer and the communication. The power receiver is arranged to detect the NFC carrier to perform the communication during the short time intervals.

During power transfer operation, the power receiver extracts power for a load from the power transfer signal. In many cases, the extraction of power is also used to power e.g. functionality of the power receiver itself, such as processing units, user interfaces etc. However, in many cases, a power receiver may also in some scenarios and during some time intervals extract power from the NFC communication carrier to supply internal circuitry etc. This may for example be done during operation prior to a power transfer phase where the power transfer signal may not be available. This may increase complexity of power extraction circuitry at the power receiver and may result in unintended interference between the extraction functions which may affect other functions and operations, such as specifically communication performance.

Hence, an improved operation for a wireless power transfer system would be advantageous, in particular, an approach allowing increased flexibility, reduced cost, reduced complexity, improved communication, additional functionality, lower power receiver circuit complexity, lower power receiver circuit cost, reduced interference between power extraction and communication, increased bandwidth/data rate, and/or improved performance would be advantageous.

### SUMMARY OF THE INVENTION

Accordingly, the Invention seeks to preferably mitigate, alleviate or eliminate one or more of the above mentioned disadvantages singly or in any combination.

According to an aspect of the invention there is provided a power transmitter for wirelessly providing power to a power receiver via an inductive power transfer signal, the power transmitter comprising: a power transfer coil arranged to generate the power transfer signal; a power transfer driver arranged to generate a power transfer drive signal for the power transfer coil, the power transfer driver being arranged to, during a power transfer phase, generate the power transfer drive signal to employ a repeating time frame comprising at least a power transfer time interval and a communication time interval, the power transfer driver being arranged to generate the power transfer drive signal during the power transfer time intervals and to not generate the power transfer drive signal during communication time intervals; a communication coil arranged to generate a communication carrier signal, a communication driver arranged to generate a communication drive signal for the communication coil to generate the communication carrier signal; a communication unit arranged to communicate with the power receiver using load modulation of the communication carrier signal; a determiner arranged to determine a power extraction indication being indicative of a power extraction property for extraction of power from the communication carrier signal by the power receiver during at least part of the communication time intervals; and a level controller arranged to control a level of the communication drive signal during communication time intervals in dependence on the power extraction indication.

The invention may provide improved performance in many embodiments and scenarios, and may provide an overall improved power transfer operation in many systems and embodiments. For example, in many embodiments, improved operation and communication may be achieved. The approach may allow efficient power extraction from both the power transfer signal and the communication carrier signal while reducing or mitigating the impact of such power extraction on the communication performance. In many scenarios improved communication performance can be achieved, such as e.g. improved reliability, reduced error rate, increased bandwidth, increased data rate, reduced delay etc.

The approach may in many scenarios allow an improved secondary power path to be provided from the power transmitter to the power receiver with this providing improved low power level transfer. In many embodiments, the approach may allow reduced complexity of the power receiver. In many scenarios it may allow an efficient combination of the different power extraction options using low complexity and low cost circuitry, such as in by using rectifiers to combine the power paths and without requiring switches or switching to be implemented.

In many embodiments, a duration of the communication time interval is no more than 5%, 10%, or 20% of the duration of the time frame. In many embodiments, the duration of the power transfer time interval(s) is no less than 70%, 80%, or 90% of the duration of the repeating time frame. Modulation of the communication carrier signal during the communication time intervals may be by load modulation of the carrier from the power receiver to the power transmitter and/or by amplitude modulation from the power transmitter to the power receiver. The communication may be NFC communication.

The power transfer driver may be arranged to generate the power transfer drive signal, and thus the power transfer signal, to have a non-zero amplitude during the power transfer time intervals and to have a zero amplitude during communication time intervals.

The communication carrier signal may also simply be referred to as a communication carrier. The communication carrier signal may be an electromagnetic field/signal generated by the communication coil.

In accordance with an optional feature of the invention, the determiner is arranged to set a first level for the communication drive signal during an initialization phase prior to the power transfer phase, the first level being set on the basis of at least one message received from the power receiver; and the determiner is arranged to determine the power extraction indication as a function of the first level.

This may allow improved operation and/or facilitated implementation and/or operation in many embodiments. It may allow a facilitated and/or improved setting of a level of the communication drive signal, and thus the communication carrier signal, during communication time intervals.

In accordance with an optional feature of the invention, the determiner is arranged to set the level of the communication drive signal to be lower in the power transfer phase than in the initialization phase.

This may allow improved operation and/or facilitated implementation and/or operation in many embodiments. It may in many scenarios allow the power extraction from the communication carrier signal to be reduced or disabled during the communication time intervals resulting in improved communication.

In accordance with an optional feature of the invention, the determiner is arranged to measure a power of the communication drive signal during at least part of the communication time intervals and to determine the power extraction indication based on the measured power of the communication drive signal.

This may allow improved operation and/or facilitated implementation and/or operation in many embodiments. It may allow a facilitated and/or improved setting of a level of the communication drive signal during communication time intervals. It may allow low complexity of the power transmitter and the power receiver. The approach may provide advantageous performance without requiring any dedicated functionality at the power receiver to support the setting of the level of the communication drive signal.

In some embodiments, the determiner is arranged to measure the power by measuring an input power to an output circuit of the communication driver.

In accordance with an optional feature of the invention, the level controller is arranged to constrain the power level of the communication drive signal to be below a maximum value for which the measured power of the communication drive signal is below a threshold.

This may allow improved operation and/or facilitated implementation and/or operation in many embodiments. It may allow a facilitated and/or improved setting of a level of the communication drive signal during communication time intervals. It may in many scenarios allow the power extraction from the communication carrier signal to be reduced or disabled during the communication time intervals resulting in improved communication.

The threshold may be a threshold higher than a power level corresponding to power extracted from the communication carrier signal by load modulation.

In accordance with an optional feature of the invention, the threshold exceeds a level of power extracted by load modulation by the power receiver.

This may allow improved operation and/or facilitated implementation and/or operation in many embodiments. It may allow a facilitated and/or improved setting of a level of the communication drive signal during communication time intervals.

In accordance with an optional feature of the invention, the communicator is arranged to receive a power extraction property indication from the power receiver, the power extraction property indication being indicative of a property of power extraction from the communication carrier signal by the power receiver; and the determiner is arranged to determine the power extraction indication from the power extraction property indication.

This may allow improved operation and/or facilitated implementation and/or operation in many embodiments. It may allow a facilitated and/or improved setting of a level of the communication drive signal during communication time intervals.

In accordance with an optional feature of the invention, the power extraction property indication is indicative of a measured power extracted from the communication carrier signal by the power receiver during at least part of the communication time intervals.

This may allow improved operation and/or facilitated implementation and/or operation in many embodiments. It may allow a facilitated and/or improved setting of a level of the communication drive signal during communication time intervals.

In some embodiments, the extracted power indication is an indication of a measured amount of power extracted by the power receiver from the communication carrier signal during at least part of the communication time intervals.

In some embodiments, the level controller is arranged to reduce the power level of the communication drive signal to a value for which the extracted power indication is indicative of the amount of power extracted by the power receiver being below a threshold.

In accordance with an optional feature of the invention, the power extraction property indication is indicative of a level of the communication carrier signal for which an amount of power extracted from the communication carrier signal by the power receiver during at least part of the communication time intervals is below a given threshold.

This may allow improved operation and/or facilitated implementation and/or operation in many embodiments. It may allow a facilitated and/or improved setting of a level of the communication drive signal during communication time intervals.

The threshold may be a predetermined threshold, and may in particular correspond to essentially no power being extracted from the communication carrier signal.

In accordance with an optional feature of the invention, the power extraction property indication is indicative of a power extraction circuit property of the power receiver.

This may allow improved operation and/or facilitated implementation and/or operation in many embodiments. It may allow a facilitated and/or improved setting of a level of the communication drive signal during communication time intervals.

In accordance with an optional feature of the invention, the communicator is arranged to receive a voltage indication from the power receiver, the determiner is arranged to determine the power extraction indication from the voltage indication, and the voltage indication is indicative of at least one voltage from the group of: an induced voltage from the power transfer signal; an induced voltage from the communication carrier signal; and a capacitor voltage of a smoothing capacitor for a power supply circuit of the power receiver, the power supply circuit being arranged to be powered by power extracted from the power transfer signal or by power extracted from the communication carrier signal.

This may allow improved operation and/or facilitated implementation and/or operation in many embodiments. It may allow a facilitated and/or improved setting of a level of the communication drive signal during communication time intervals.

In accordance with an optional feature of the invention, the level controller is arranged to constrain the level of the communication drive signal to be below a threshold that is dependent on the power extraction indication.

This may allow improved operation and/or facilitated implementation and/or operation in many embodiments. It may allow a facilitated and/or improved setting of a level of the communication drive signal during communication time intervals.

The threshold may be a monotonically increasing function of the power extraction indication.

According to an aspect of the invention there is provided power receiver for wirelessly receiving power from a power transmitter via an electromagnetic power transfer signal, power transfer signal employing a repeating time frame comprising at least a power transfer time interval and a communication time interval, the power transfer signal being present during the power transfer time intervals and not present during communication time intervals, the power receiver comprising: a first power extraction circuit arranged to extract power from the power transfer signal during power transfer time intervals of a power transfer phase; a communication coil for receiving a received communication carrier signal, the communication carrier signal being present during communication time intervals;
a second power extraction circuit arranged to extract power from the communication carrier signal during at least a power transfer initialization phase; a power supply for generating a power supply for the power receiver, the power supply being arranged to combine extracted power from the first power extraction circuit and from the second power extraction circuit; and a communication unit arranged to communicate with the power transmitter using modulation of the communication carrier signal during the communication time intervals; and wherein the communication unit is arranged to transmit a power extraction property indication to the power transmitter, the power extraction property indication being indicative of a property of power extraction by the second power extraction circuit.

According to an aspect of the invention there is provided a method of operation for a power transmitter wirelessly providing power to a power receiver via an inductive power transfer signal, the method comprising: a power transfer coil generating the power transfer signal; generating a power transfer drive signal for the power transfer coil including during a power transfer phase, generating the power transfer drive signal to employ a repeating time frame comprising at least a power transfer time interval and a communication time interval, the power transfer drive signal being generated during the power transfer time intervals and not being generated during communication time intervals; a communication coil generating a communication carrier signal, generate a communication drive signal for the communication coil to generate the communication carrier signal; communicating with the power receiver using load modulation of the communication carrier signal; determining a power extraction indication being indicative of a power extraction property for extraction of power from the communication carrier signal by the power receiver during at least part of the communication time intervals; and controlling a level of the communication drive signal during communication time intervals in dependence on the power extraction indication.

According to an aspect of the invention there is provided method of operation for a power receiver wirelessly receiving power from a power transmitter via an electromagnetic power transfer signal, power transfer signal employing a repeating time frame comprising at least a power transfer time interval and a communication time interval, the power transfer signal being present during the power transfer time intervals and not present during communication time intervals, the method comprising: a first power extraction circuit extracting power from the power transfer signal during power transfer time intervals of a power transfer phase; a communication coil receiving a received communication carrier signal, the communication carrier signal being present during communication time intervals; a second power extraction circuit extracting power from the communication carrier signal during at least a power transfer initialization phase; a power supply generating a power supply for the power receiver, the power supply combining the extracted power from the first power extraction circuit and from the second power extraction circuit; and a communication unit communicating with the power transmitter using modulation of the communication carrier signal during the communication time intervals; and wherein the communication unit transmits a power extraction property indication to the power transmitter, the power extraction property indication being indicative of a property of power extraction by the second power extraction circuit.

There may be provided a wireless power transfer system comprising a power transmitter and a power receiver as described above.

These and other aspects, features and advantages of the invention will be apparent from and elucidated with reference to the embodiment(s) described hereinafter.

### BRIEF DESCRIPTION OF THE DRAWINGS

Embodiments of the invention will be described, by way of example only, with reference to the drawings, in which
FIG. 1 illustrates an example of elements of a power transfer system in accordance with some embodiments of the invention;
FIG. 2 illustrates an example of elements of a power transmitter in accordance with some embodiments of the invention;
FIG. 3 illustrates an example of elements of a power receiver in accordance with some embodiments of the invention;
FIG. 4 illustrates an example of a time frame for a wireless power transfer system in accordance with some embodiments of the invention;
FIG. 5 illustrates an example of a power transfer signal and a communication carrier signal in a wireless power transfer system;
FIG. 6 illustrates an example of some elements of a power receiver in accordance with some embodiments of the invention;
FIG. 7 illustrates an example of voltages in a wireless power receiver; and
FIG. 8 illustrates an example of voltages in a wireless power receiver.

### DETAILED DESCRIPTION OF THE EMBODIMENTS

The following description focuses on embodiments of the invention applicable to a wireless power transfer system utilizing a power transfer approach such as known from the Ki specification. However, it will be appreciated that the invention is not limited to this application but may be applied to many other wireless power transfer systems.

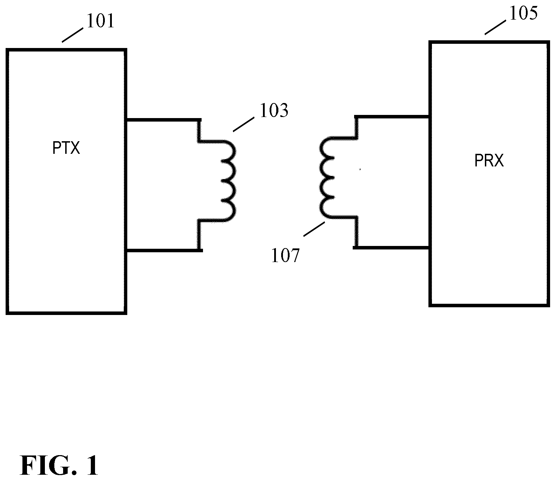

FIG. 1 illustrates an example of a power transfer system in accordance with some embodiments of the invention. The power transfer system comprises a power transmitter 101 which includes (or is coupled to) a transmitter coil / inductor 103. The system further comprises a power receiver 105 which includes (or is coupled to) a receiver coil/ inductor 107.

The system provides an electromagnetic power transfer signal which may inductively transfer power from the power transmitter 101 to the power receiver 105. Specifically, the power transmitter 101 generates an electromagnetic signal, which is propagated as a magnetic flux by the transmitter coil or inductor 103. The power transfer signal may correspond to the electromagnetic power transfer component representing the energy transfer from the power transmitter to the power receiver, and may be considered to correspond to the component of the generated electromagnetic field that transfers power from the power transmitter to the power receiver. For example, if there is no loading of the receive coil 107, no power will be extracted by the power receiver from the generated electromagnetic field (apart from losses). In such a scenario, the driving of the transmitter coil 103 may generate an electromagnetic field of potentially high field strength but the power level of the power transfer signal will be zero (apart from losses). In some situations, where a foreign object is present, the power transfer signal may be considered to include a component corresponding to the power transfer to the foreign object, and thus the power transfer signal may be considered to correspond to the power being extracted from the electromagnetic field generated by the power transmitter.

The power transfer signal may typically have a frequency between around 20 kHz to around 500 kHz, and for Ki compatible systems typically in the range between 20kHz to 80kHz. The transmitter coil 103 and the power receiving coil 107 are loosely coupled and thus the power receiving coil 107 picks up (at least part of) the power transfer signal from the power transmitter 101. Thus, the power is transferred from the power transmitter 101 to the power receiver 105 via a wireless inductive coupling from the transmitter coil 103 to the power receiving coil 107. The term power transfer signal is mainly used to refer to the inductive signal/ magnetic field between the transmitter coil 103 and the power receiving coil 107 (the magnetic flux signal), but it will be appreciated that by equivalence it may also be considered and used as a reference to an electrical signal provided to the transmitter coil 103 or picked up by the power receiving coil 107.

In the example, the power receiver 105 is specifically a power receiver that receives power via the receiver coil 107. However, in other embodiments, the power receiver 105 may comprise a metallic element, such as a metallic heating element, in which case the power transfer signal directly induces eddy currents resulting in a direct heating of the element. The power receiver may accordingly provide a load to the power transfer signal by comprising an inductive power extraction element which specifically may be a power extraction coil or an electrical (e.g. heating) element in which current is induced by the power transfer signal.

The system is arranged to transfer substantial power levels, and specifically the power transmitter may support power levels in excess of 50W, 100W, 500W, or 1 kW. For example, for Ki type applications, the power transfers may often be in excess of 100 W, and may be up to more than 2500W for very high power applications.

In the following, the operation of the power transmitter 101 and the power receiver 105 will be described with specific reference to an embodiment generally in accordance with the Specifications (except for the herein described (or consequential) modifications and enhancements) being developed by the Wireless Power Consortium. In particular, the power transmitter 101 and the power receiver 105 may follow, or substantially be compatible with, elements of the Ki Standards.

Many wireless power transfer systems, and in particular high power systems such as Ki, utilize resonant power transfer where the transmitter coil 103 is part of a resonance circuit and typically the receiver coil 107 is also part of a resonance circuit. In many embodiments, the resonance circuits may be series resonance circuits and thus the transmitter coil 103 and the receiver coil 107 may be coupled in series with a corresponding resonance capacitor. The use of resonance circuits tends to provide a more efficient power transfer.

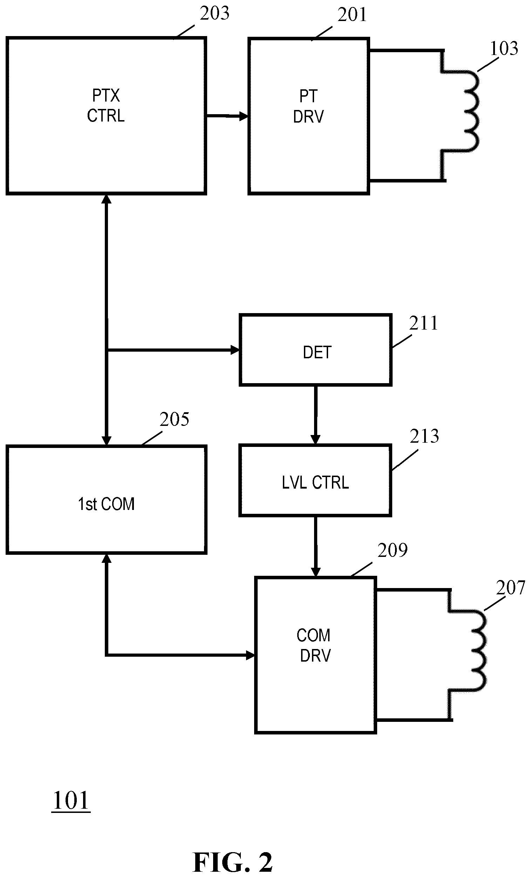

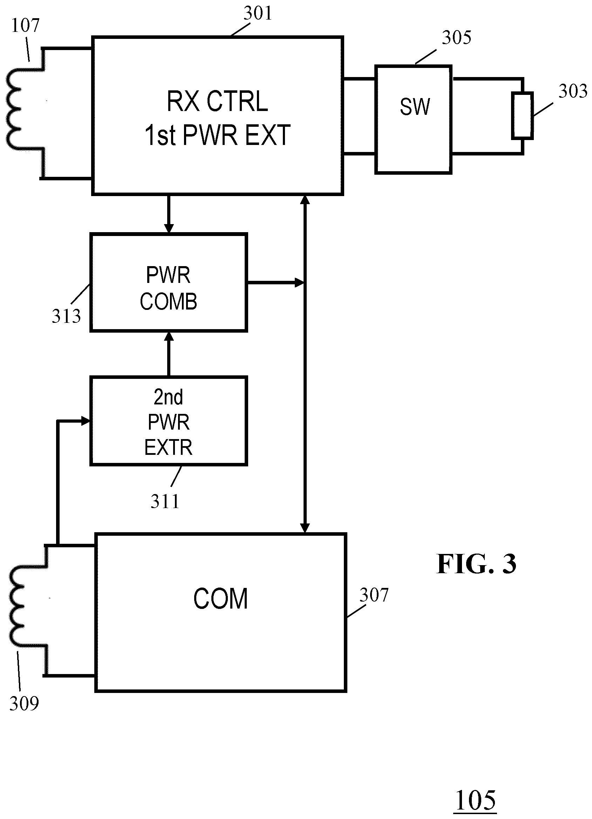

FIG. 2 illustrates elements of the power transmitter 101 and FIG. 3 illustrates elements of the power receiver 105 of FIG. 1 in more detail.

The power transmitter 101 includes a driver 201 which can generate a drive signal that is fed to the transmitter coil 103 which in return generates the electromagnetic power transfer signal, which provides a power transfer to the power receiver 105. The power transfer signal is provided (at least) during power transfer time intervals of the power transfer phase.

The driver 201 may typically comprise an output circuit in the form of an inverter, typically formed by driving a full or half bridge as will be well known to the skilled person.

The power transmitter 101 further comprises a power transmitter controller 203 which is arranged to control the operation of the power transmitter 101 in accordance with the desired operating principles. Specifically, the power transmitter 101 may include many of the functionalities required to perform power control in accordance with the Ki Specifications.

The power transmitter controller 203 is in particular arranged to control the generation of the drive signal by the driver 201, and it can specifically control the power level of the drive signal, and accordingly the level of the generated power transfer signal. The power transmitter controller 203 comprises a power loop controller controlling a power level of the power transfer signal in response to the power control messages received from the power receiver 105 during the power control phase.

In order to receive data and messages from the power receiver 105, the power transmitter 101 comprises a first communicator 205 which is arranged to receive data and messages from the power receiver 105 as well as transmit data and messages to the power receiver 105 (as will be appreciated by the skilled person, a data message may provide one or more bits of information).

In the approach, the communication is performed by modulation of a communication carrier signal that is generated by a first communication coil 207. The power transmitter specifically comprises a communication driver 209 which is coupled to the first communication coil 207. The communication driver 209 is arranged to generate a communication drive signal which is fed to the first communication coil 207 to generate the communication carrier signal. The communication driver 209 may typically be arranged to generate the communication drive signal/communication carrier signal to have a substantially different frequency that the power transfer drive signal/ power transfer signal. In many embodiments, the frequency of the communication carrier signal may be no less than 10, 100, or 500 times higher than the frequency of the power transfer signal. In many embodiments, the frequency of the communication drive signal/ communication carrier signal may have a frequency of no less than 500kHz, 1 MHz, or 10 MHz. Specifically for an NFC implementation, the communication carrier signal frequency may be 13.56 MHz.

The first communicator 205 is coupled to the communication driver 209 and is arranged to control this to modulate the communication drive signal! communication carrier signal in order to transmit data to the power receiver (in the following references to the communication drive signal also include the implicit reference to the communication carrier signal as appropriate).

The modulation is in the specific example an amplitude modulation of the communication drive signal, and specifically a binary communication using Amplitude Shift Keying (ASK) is used. However, it will be appreciated that in other embodiments, the modulation may use other approaches, such as phase or frequency modulation of the communication drive signal.

In some embodiments, the first communicator 205 may for example receive data to be transmitted to the power receiver from the power transmitter controller 203 and in response generate a control modulation signal that is fed to the communication driver 209. The control modulation signal may for example be a binary signal that matches the data to be transmitted and the communication driver 209 may be arranged to generate the communication drive signal to have corresponding amplitude variations.

For communication from the power receiver to the power transmitter, the modulation of the communication drive signal may be a load modulation. The power receiver may be arranged to modulate the power transfer signal by varying a loading of the power transfer signal generated by the transmitter coil 103 in accordance with the data to be transmitted. The first communicator 205 may be arranged to sense variations in the voltage and/or current of the transmitter coil 103 and to demodulate the load modulation based on these. The skilled person will be aware of the principles of load modulation and therefore these will not be described in further detail.

In many embodiments, the communication may be in accordance with the Near Field Communication, NFC, Specifications and the power receiver may specifically include NFC functionality. In many embodiments, the first communicator 205, communication driver 209, and first communication coil 207 may implement (at least) the functionality of an NFC reader. Thus, in many embodiments, the communication drive signal/ communication carrier signal is a constant level (except for modulation) 13.56 MHz signal.

The following description will focus on examples where the communication between the power transmitter and power receiver is by NFC communication and specifically where modulation of the NFC carrier in the direction from the power transmitter to the power receiver is by Amplitude Shift Keying (ASK) and modulation of the NFC carrier in the direction from the power receiver to the power transmitter is by load modulation.

In the system of FIGs. 1-3, the communication is during the power transfer phase performed in communication time intervals. Specifically, the transmitter controller 203 may be arranged to synchronize the first communicator 205 such that the communication operation (typically both receiving and transmitting data) is performed in (and typically only in) the communication time intervals of the power transfer phase, i.e. in the time intervals that are assigned for communication.

This may substantially improve communication performance.

As will be described in more detail in the following, the approach utilizes a time division approach during the power transfer phase wherein operations, such as foreign object detection and communication, and power transfer may e.g. be performed in different time intervals thereby allowing the interference between these (specifically the impact of the power transfer on the foreign object detection/ communication) to be reduced substantially.

Specifically, for the wireless power transfer system, the power transfer signal is subject to a repeating time frame which comprises at least one power transfer time interval and one communication time interval.

The power transmitter may be arranged to switch off the power transfer signal during the communication time interval and the power receiver may in some embodiments be arranged to disconnect the load during the reduced power time interval.

The power transmitter (and typically the power receiver) may then arrange for one or more operations (functions, processes, procedures) to be performed during the communication time interval, i.e. it may synchronize the execution of one or more operations of the power transmitter to occur during the communication interval. For example, it may typically synchronize the performance of the foreign object detection and communication to occur during the communication time interval. In this way, it can be achieved that the impact of the power transfer and the power transfer signal on the given operation, specifically the foreign object detection and the communication, can be reduced and often minimized.

FIG. 3 illustrates some exemplary elements of the power receiver 105.

The receiver coil 107 is coupled to a power receiver controller 301 which couples the receiver coil 107 to a load 303 via a switch 305 (i.e., it is a switchable load 305). The power receiver controller 301 includes a first power extraction circuit which is arranged to extract power from the power transfer signal during power transfer time intervals of a power transfer phase. The first power extraction circuit may specifically extract power for the load 303 during the power transfer phase but will typically also extract power for functionality of the power receiver itself, such as control functionality and indeed the power receiver controller 301 itself, as well as e.g., communication functionality etc.

The power receiver controller 301 may specifically include a power control path which converts the power extracted by the receiver coil 107 into a suitable supply for the load 303. In addition, the power receiver controller 301 may include various power receiver controller functionality required to perform power transfer, and in particular functions required to perform power transfer in accordance with the Qi specifications.

In order to support communication from the power receiver 105 to the power transmitter 101 the power receiver 105 comprises a second communicator 307 and a second communication coil 309. The second communication coil 309 is arranged to couple to the first communication coil 207 and thus the communication carrier signal induces a current (at least an emf) in the second communication coil 309.

The second communicator 307 is coupled to the second communication coil 309 and is arranged to determine amplitude variations in the induced signal and to demodulate amplitude modulations of the communication carrier signal. Thus, the second communicator 307 is arranged to decode data transmitted from the power transmitter by amplitude modulation of the communication carrier signal. It will be appreciated that in other embodiments, the second communicator 307 may be arranged to decode data modulated onto the communication carrier signal using other modulation formats such as frequency or phase modulation.

The second communicator 307 is further arranged to load modulate the communication carrier signal in order to transmit data from the power receiver to the power transmitter. Specifically, the second communicator 307 may comprise a load (such as a capacitor) which depending on the data to transmit can be switched between being coupled to the second communication coil 309 and not being coupled to the second communication coil 309. These load modulations may then be detected by the first communicator 205 of the power transmitter.

In the specific example, the second communication coil 309 and the second communicator 307 may provide NFC compatible communication operation. Specifically, the second communication coil 309 may be arranged to provide functionality corresponding to an NFC tag and to decode data that has been ASK modulated onto the communication carrier signal in accordance with the NFC specifications.

Thus, the second communicator 307 is arranged to transmit data to the power transmitter by varying the loading of the receiver coil 107 in response to data to be transmitted to the power transmitter 101. The load variations are then detected and demodulated by the power transmitter 101 as will be known to the person skilled in the art.

In the example, the second communicator 307 is furthermore arranged to demodulate amplitude, frequency, and/or phase modulation of the communication carrier signal in order to retrieve data transmitted from the power transmitter.

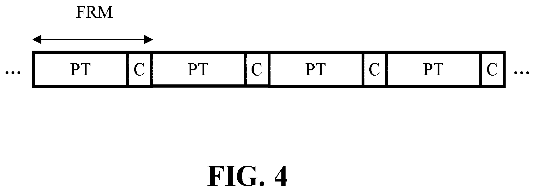

The system applies a repeating time frame during the power transfer phase where the time frame comprises at least one power transfer time interval and at least one communication time interval. An example of such a repeating time frame is illustrated in FIG. 4 where power transfer time intervals are indicated by PT and communication time intervals are indicated by C. In the example, each time frame FRM comprises only one communication time interval and one power transfer time interval. However, it will be appreciated that in other embodiments, other time intervals may also be included in a time frame or a plurality of communication time intervals and/or power transfer time intervals may be included in each time frame.

The power transfer driver 201 is controlled by the power transmitter controller 205 to only generate a drive signal during the power transfer time intervals and not during the communication time intervals. Thus, the driver generates the drive signal and thus the power transfer signal during the power transfer time intervals, whereas the drive signal and thus the power transfer signal is switched off during the communication time intervals.

In the power transfer phase, the power transmitter is thus arranged to perform power transfer during the power transfer time interval of the time frames of the power transfer phase. Specifically, during these time intervals, the power transmitter and the power receiver may operate a power control loop (the power control loop may be based on communication within communication time intervals corresponding to repeating time intervals). Thus, the level of the power being transferred may be dynamically varied.

In the communication time intervals of the time frames of the power transfer phase, the power drive signal is however switched off and thus no power transfer signal is generated during the communication time intervals.

The communication between the power transmitter and the power receiver is during the power transfer phase performed in the communication time intervals, and typically is only performed in the communication time intervals. The communication via the first communication coil 207 and the second communication coil 309 is only performed in the communication time intervals and specifically the modulation of the communication carrier signal occurs only in the communication time intervals.

In the system, the first communicator 205 is accordingly arranged to only transmit data, and thus to only (e.g. amplitude) modulate the communication carrier signal, during the communication time intervals. Likewise, it will typically only seek to demodulate data during the communication time intervals.

Similarly, the second communicator 307 is arranged to only communicate during communication time intervals when in the power transfer phase. In the system, the second communicator 307 is accordingly arranged to only transmit data, and thus to only load modulate the communication carrier signal, during the communication time intervals. Likewise, it will typically only seek to demodulate data during the communication time intervals.

Thus, during the power transfer phase, the first communicator 205 and the second communicator 307 are arranged to only communicate during the communication time intervals. Such an approach may provide highly advantageous performance and in particular has been found to provide much improved communication performance. In particular, the approach reduces interference to the communication operation from the power transfer signal thereby providing a more reliable and robust communication with reduced bit errors.

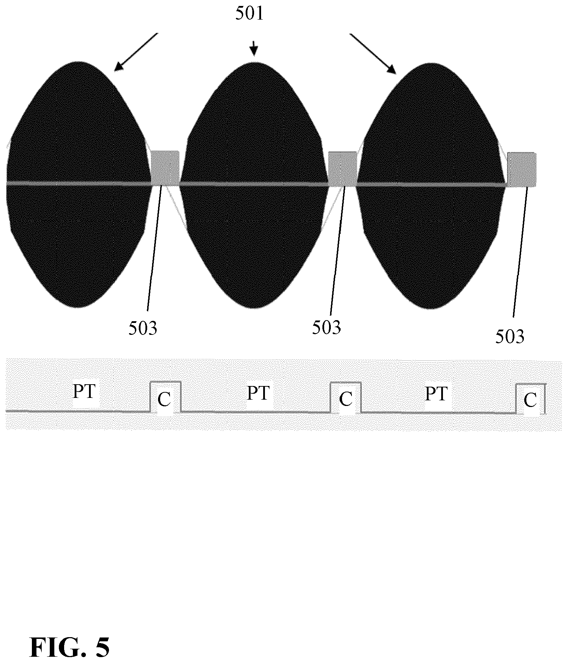

An example of how communication in communication time intervals of a repeating time frame could be performed is shown in FIG. 5 which shows the power transfer signal 501 being generated during the power transfer time intervals PT and the modulated communication carrier signal 503 being generated during the communication time intervals C. FIG. 5 implements the time division between power transfer and communication with each operation being performed in the dedicated time interval.

The power receiver further comprises a second power extraction circuit 311 arranged to extract power from the communication carrier signal. The signal induced in the second communication coil 309 may for example be rectified and smoothed to generate a DC signal that can provide a supply power to e.g. control functionality of the power receiver. The second power extraction circuit 311 may be arranged to extract power during a power transfer initialization phase, and thus may extract power from the communication carrier signal prior to a power transfer being initialized, and thus in many cases prior to the power transfer signal being generated. The second power extraction circuit 311 may in particular extract power from the communication carrier signal during a connected phase of a Ki power transfer initialization.

The power receiver comprises a power supply circuit 313 which is coupled to the power receiver controller 301/first power extraction circuit as well as to the second power extraction circuit 311. The power supply circuit 313 may receive the extracted power from the first and second power extraction circuits 311, 313 and proceed to combine such power signals to generate a power supply (signal) for the power receiver. The power supply may be provided to some (but sometimes not all) circuitry of the power receiver, such as to control and/or communication functionality.

The combination may for example be a time based combination where the power supply is sometimes generated from the communication carrier signal, i.e. is generated from the power extracted by the second power extraction circuit 311 and at other times is generated from the power transfer signal, i.e. is generated from the power extracted by the first power extraction circuit.

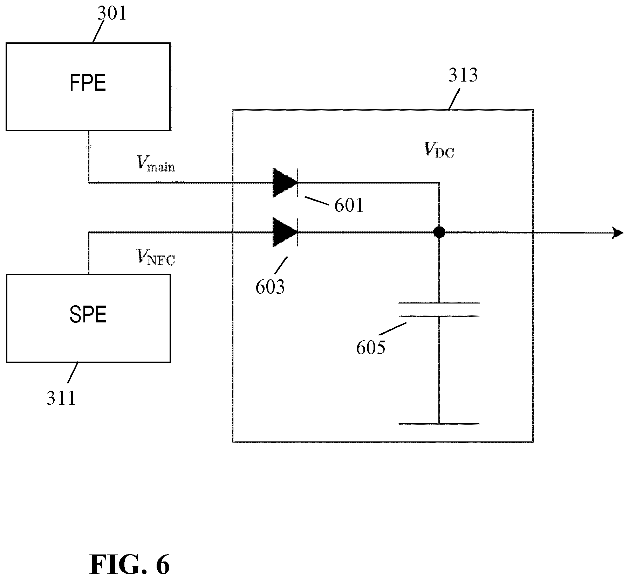

In many embodiments, the first power extraction circuit, second power extraction circuit 311, and power supply circuit 313 may advantageously be very low complexity circuits thereby allowing a low cost and low complexity power receiver implementation. In particular, FIG. 6 illustrates an example of a low complexity implementation where the first power extraction circuit and the second power extraction circuit 311 are coupled together via a set of diodes 601, 603 (having the power signals generated by the first power extraction circuit and the second power extraction circuit 311 coupled to the anodes of the diodes 601, 603 and having the cathodes coupled together). The connected cathodes are coupled to a capacitor 605 which smoothes the output voltage of the power supply circuit 313. (It will be appreciated that the diodes and indeed the capacitor could equivalently be considered to be part of the first power extraction circuit and/or the second power extraction circuit 311).

However, such approaches may cause conflicts with other functions, and in particular may cause conflicts with the time frame based power transfer and communication, and in particular with the discontinuous power transfer signal and/or communication carrier signal. In particular, in the previously described slotted communication approach, both the communication carrier signal and the power transfer signal are applied discontinuously resulting in bias supply transitions between the power being extracted from the communication carrier signal by the second power extraction circuit 311 (also referred to as the communication carrier-powered mode) and being extracted from the power transfer signal by the first power extraction circuit (also referred to as the power carrier-powered mode). When the bias power supply is in transition from the power carrier-powered mode to the communication carrier-powered mode, the loading on the communication carrier signal changes. Specifically, in the example of FIG. 6, if the output voltage of the second power extraction circuit 311 is above the DC voltage over the capacitor 605 (assuming that there is no voltage drop over the diode), the current from the second power extraction circuit 311 is used to charge capacitor and to provide supply power to e.g. control electronics.

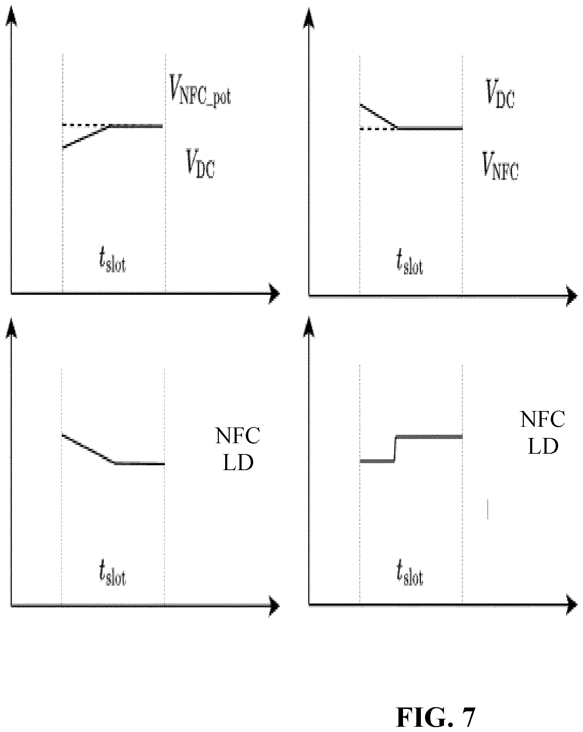

This may be illustrated by two examples of the behavior during a communication time intervals as illustrated in FIG. 7. In the first example, the capacitor voltage V_{DC} is initially below the voltage V_{NFC_pot} of the signal from the second power extraction circuit 311. Accordingly, the diode 601 is conducting and the capacitor 605 is being charged until it reaches the voltage of the signal from the second power extraction circuit 311. Accordingly, the loading NFC LD is initially high and decreases until a constant level corresponding to the loading for the diode 601 being in the non-conductive mode (typically corresponding to the load provided by the second power extraction circuit 311 itself).

In the second example, the voltage V_{DC} over the capacitor 605 is initially higher than the voltage of the signal from the second power extraction circuit 311. However, due to power being extracted from the power supply circuit 313, the capacitor voltage reduces until it reaches the voltage V_{NFC} of the extracted power signal and the diode 601 opens to allow charging of the capacitor 605 resulting in a constant capacitor voltage. The corresponding loading of the communication carrier signal is accordingly initially at a lower level but increases when the diode 601 starts conducting.

Thus, the operation results in load variations of the communication carrier signal which are not due to the load modulation by the second communicator 307. Such load variations may be detrimental to the load modulation communication with the power transmitter.

Even though the load variations may be restricted to e.g., an initial interval of the communication time intervals, it may still have a significant impact on the operation. Indeed, in order to achieve high power delivery efficiency, the communication time interval duration should be minimized, and the practical value for time interval durations can e.g. typically be 1.5ms with a 10ms repetition rate, synchronized with the 50 Hz mains zero crossings (8.66ms repetition for a 60Hz mains connection). As indicated above, bias power supply-initiated transients can impose a parasitic carrier load modulation, and reduce the effective time available for communication within a slot, thus reducing a valuable payload. Indeed, the NFC Specifications assume that the NFC carrier is stable and unmodulated for a short time before the first symbol is transitioned. Therefore, it is highly desirable that the load variations of the communication carrier signal (by anything else than the load modulation) is reduced or removed for as much of the communication time intervals as possible, and ideally for the entire duration of the communication time intervals.

Another issue is that during the communication time intervals, load variations for the load 303 may often occur, and these will when the second power extraction circuit 311 is coupled to the load 605 (e.g. via the diode 601 being open) typically directly affect the loading of the communication carrier signal, and thus will interfere with the load modulation and communication with the power transmitter.

An approach that might reduce such issues could be for the power receiver to actively control a switch to disable any power extraction from the communication carrier signal during the communication time intervals or indeed during the entire power transfer phase. For example, a switch could disconnect the second power extraction circuit 311 from the power supply circuit 313. However, in order to implement such functionality, additional power receiver circuitry would be required which would increase complexity and cost for the power receiver. In many cases, the complexity and cost of power receivers is highly critical and thus increasing the complexity and adding circuitry to a power receiver is undesirable. Further, including e.g., a switch between the second power extraction circuit 311 and the power supply circuit 313 will result in additional power loses and switching delays.

The power transmitter of FIG. 2 and the power receiver of FIG. 3 may provide a different approach that may be advantageous in many scenarios.

The power transmitter specifically comprises a determiner 211 which is arranged to determine a power extraction indication that is indicative of a power extraction property for the extraction of power from the communication carrier by the power receiver during at least part of the communication time intervals. The power extraction property may, as will be described in more detail later, be a measured loading of the communication carrier signal, a field strength/communication carrier signal level for which no power is extracted, a power extraction circuit property, etc.

The power transmitter further comprises a level controller 213 which is arranged to control a level of the communication drive signal, and thus the communication carrier signal, during communication time intervals in dependence on the power extraction indication. In many embodiments, the level controller 213 is arranged to constrain the communication drive signal to be below/not exceed a given threshold where the threshold is determined from the power extraction indication.

In many embodiments, the level controller 213 is arranged to set the level of the communication drive signal, and thus the communication carrier signal, such that the communication carrier has magnetic field strength resulting in the induced signal and the signal extracted by the second power extraction circuit 311 having a value that results in the corresponding diode 601 not conducting. Thus, in many embodiments, the level controller 213 may be arranged to set the level of the communication drive signal such that no power is extracted from the communication carrier signal during the communication time intervals.

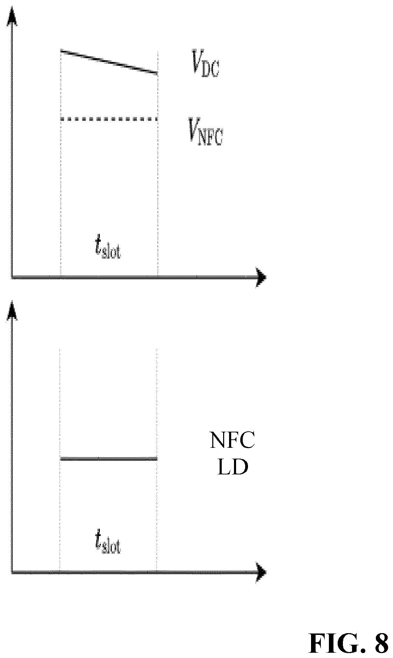

FIG. 8 illustrates such an example (corresponding to the scenarios of FIGs. 6 and 7) where the voltage V_{NFC} of the extracted power signal is below the capacitor voltage V_{DC} for the entire duration of the communication time interval. Accordingly, the loading of the communication carrier is isolated from the load of the generated supply signal and thus is typically substantially constant throughout the communication time intervals except for the load variations caused by the load modulation. Accordingly, an improved communication may be achieved and in particular communication may be performed throughout the entire communication time interval duration thereby allowing increased communication bandwidth and data rates.

In some embodiments, the determiner 211 may be arranged to measure a power of the communication drive signal during the communication time intervals and to determine the power extraction indication based on the measurements.

The determiner 211 may include functionality that measures the power of the communication drive signal. For example, for a constant voltage amplitude, the power of the communication drive signal may be determined by measuring the current of the communication drive signal, and thus the current through the first communication coil 207. For example, the RMS current may be measured during a communication time interval and used as a direct measure of the loading of the communication carrier signal. In situations where the only loading of the communication carrier signal is by a modulation load of the power receiver, the corresponding current and power level of the communication drive signal will be very low. However, if power is extracted from the second power extraction circuit 311 during the communication time intervals, the current and power level of the communication drive signal will increase by an amount corresponding to the extracted power (and any additional losses). Thus, the measurement of the power of the communication drive signal can directly provide an indication of the power extraction operation at the power receiver, and specifically whether the second power extraction circuit 311 extracts power or not.

In some embodiments, the determiner 211 may for example be arranged to determine the power by measuring an input power to the output circuit of the communication driver. For example, it may measure the input power to an inverter generating the communication drive signal and driving the second communication coil 207. In other embodiments, a signal, such as a current, of the output circuit may be directly measured.

The level controller 213 may then adapt the level of the communication drive signal dependent on the measured power level. For example, in some embodiments, the determiner 211 may be arranged to perform the measurement for a fixed/ predetermined amplitude/level of the communication drive signal and may then proceed to determine a new level of the communication drive signal as a function of the measured power, and indeed in some embodiments as a predetermined function. The function may typically be a monotonically decreasing function of the measured power level, and thus the level of the communication drive signal may be set to a lower value for an increasing measured power level.

In many embodiments, the level controller 213 and determiner 211 may be arranged to form a loop in which the level of the communication drive signal is repeatedly adapted based on the measurements. For example, if a measurement indicates a power level above a given threshold, the level controller 213 may proceed to reduce the level of the communication drive signal by a given step size. If a measurement indicates a power level below a threshold, the level controller 213 may instead increase the level by a given step size. Accordingly, the signal level of the communication drive signal can be dynamically adapted to maintain the extracted power from the communication drive signal, and thus the communication carrier signal, to not exceed a given threshold.

The approach may be arranged to constrain the power level of the communication drive signal such that it is below a (maximum value) for which the measured power of the communication drive signal is below a threshold. The power level is specifically set/reduced to a level for which the measured communication drive signal is below a given value/threshold.

In many embodiments, the threshold may be set such that it is higher than the power level that corresponds to the load modulation, and specifically to the power that is extracted by a modulation load of the power receiver. The threshold may further be set to include a component corresponding to a loading of the communication carrier by metal in which current may be induced by the communication carrier signal. For example, the threshold may be adjusted to reflect that the communication carrier signal may cause induction and thus power loss in metal parts of the power transmitter and the power receiver itself. The threshold may for example be set during an initialization phase where measurements may be performed to measure both the impact of the load modulation as well as optionally the power loss of any metal, but with the power receiver being arranged to not extract any power. For example, during a short interval during an initialization process, the power transmitter and power receiver may enter a test mode where the power receiver modulates the communication carrier signal while switching off the second power extraction circuit 311, and with the power transmitter measuring the resulting power levels of the communication drive signal. The threshold may then be set depending on this power level, e.g. to a level that is, say, 20-50% higher.

The threshold accordingly often be set to a level that exceeds a level of power extracted by load modulation by the power receiver and thus the level of the communication drive signal may be set to allow load modulation but prevent any significant power extraction by the second power extraction circuit 311. Typically, the power level of load modulation (and nearby metal) is much lower than typical power extraction levels and therefore such an approach may provide a substantially improved operation and a more stable communication carrier signal for the load modulation.

It will be appreciated that in some embodiments, the power may be measured over the entire communication time interval and e.g. an average value may be determined. In other embodiments, the power may only be measured in part of a communication time interval, such as for example during the initial part of a communication time interval where it is e.g. more likely that power is extracted from the communication carrier signal.

In some embodiments, the initialization of a power transfer phase includes an initialization phase in which a level of the communication carrier signal is determined. During the initialization phase, typically no power transfer signal is generated, and power is extracted from the communication carrier signal by the power receiver. Specifically, for a Ki wireless power transfer system, the power transmitter and power receiver may enter a connected phase in which the power transmitter and power receiver communicate to prepare for transition to the power state. In particular power negotiation is performed and other parameters may be shared between transmitter and receiver. In this phase, a user can typically use the user interface of the power receiver to select settings or to switch the device on.

During the initialization phase, and specifically the connected phase, the determiner 211 may be arranged to determine a level of the communication drive signal, and thus the communication carrier signal. This initialization phase level is determined based on communication with the power receiver and specifically may be determined by the power transmitter transmitting at least one level indication to the power transmitter, and the power transmitter adapting the level accordingly.

For example, in some embodiments, the power receiver may during the connected/initialization phase transmit a level request message and the power transmitter may set the level of the communication drive signal accordingly. For example, the power receiver may simply transmit an identification (e.g. of the type) of the power receiver and the power transmitter may extract a suitable communication drive signal level stored for the given (type of) power receiver. Suitable levels may for example have been determined by experiments and measurements during a manufacturing or design phase and then stored in the power transmitter during production.

In many embodiments, the power transmitter and power receiver may be arranged to establish a control loop during the connected/initialization phase which adapts the level of the communication drive signal/communication carrier signal to a suitable level. For example, the power receiver may repeatedly compare a current power extraction parameter, such as the voltage over the capacitor 605 (with the only power extraction in this phase typically being from the communication carrier signal by the second power extraction circuit 311), to a reference level and based on this transmit a request for an increase or decrease in the level of the communication carrier signal. The power transmitter may increase or decrease the level of the communication drive signal by a given step size in response to each request. The loop may then adapt the signal level of the communication drive signal/communication carrier signal to be the appropriate level to provide the desired power extraction parameter, such as the desired voltage over the capacitor 605.

Thus, during the connected/initialization phase, the level of the communication drive signal is set to a level that is appropriate for the current power receiver and power transfer arrangement. This level may then be used as the power extraction indication (or this may be derived therefrom) based on which the level during the power transfer phase is set. For example, the level determined during the connected/initialization phase may be considered a reference level for the communication drive signal, and the level during the power transfer phase may be set as a function thereof. For example, in some embodiments, the level of the communication drive signal during the communication time intervals of the power transfer phase may be set to be the same as the reference level.

In many embodiments, the level during the communication time intervals may be set to a different level and may be determined by a non-unity function being applied to the reference level. It is feasible in some embodiments that the level during the communication time intervals may be set higher than the reference level, but in most embodiments it may be set to a lower level. Thus, typically the level of the communication drive signal is set to be lower in the communication time intervals of the power transfer phase than in the initialization phase.

This may reflect that the level during the connected/initialization phase is typically determined to provide a suitable power extraction from the communication carrier signal whereas it is typically desired that the level of the communication drive signal during the communication time intervals is set as high as possible but without resulting in power extraction. The determination of the level during the communication time intervals based on the reference levels during the connected/initialization phase provides an effective approach for determining a suitable trade-off while at the same time allowing a relatively low complexity and resource demand. In many embodiments, the level of the communication drive signal may simply be set to not exceed a predetermined fraction of the reference level determined during the connected/initialization phase, such as for example to not exceed e.g. 30%, 50%, or 70% of the reference level.

Thus, as a specific example, in some embodiments, the power transmitter can select an arbitrarily lower power level of the NFC carrier (the communication carrier signal) compared to the level of the NFC carrier (the communication carrier signal) applied during the connected phase. Additionally, the power transmitter may verify that the power level is suitable for communication by measuring the loading of the NFC carrier during the communication slot and estimating if power extraction is reflected in this loading. The setting may be determined by estimating the power transmitted to the power receiver during the connected phase (when NFC power is inevitably used to power the power receiver) and by power measurement during the communication time intervals. This power measurement can e.g. be done at either DC power source side or in the NFC inverter generating the communication drive signal.

In the previous examples, the determination of the power extraction indication used to set the level of the communication drive signal during the communication time intervals was predominantly determined based on operations at the power transmitter, including measurements performed at the power transmitter.

However, in many embodiments, the power receiver is arranged to transmit a power extraction property indication to the power transmitter where the power extraction property indication is indicative of a property of power extraction by the second power extraction circuit. For example, the power receiver may perform an operation or measurement to determine a property/parameter of the extraction of power from the communication carrier signal. The second communicator 307 may be arranged to transmit a message with an indication thereof to the power transmitter which may proceed to determine the power extraction indication and the level of the communication drive signal depending on the received power extraction property indication.

In many embodiments, the power receiver is arranged to measure the power that is extracted from the communication carrier signal and to generate the power extraction property indication to reflect the measured value. The value may specifically be measured during the communication time intervals, or at least part of the communication time intervals.

For example, the power receiver controller 301 may be arranged to measure the current through the diode 601 connected to the second power extraction circuit 311 and use this as an example of the power extraction property indication, or indeed the power of the output from the second power extraction circuit 311 may be measured directly and transmitted to the power transmitter as the power extraction property indication.

The power transmitter may receive the power extraction property indication and proceed to determine the level of the communication drive signal based on this. For example, the received measurement may be used as previously described for a measurement performed by the power transmitter, such as for example to implement a feedback loop that continuously adapts the level of the communication drive signal until it is at a level where the received power extraction property indication indicates that no power is extracted by the second power extraction circuit 311. In particular, in some embodiments, the level controller 213 may be arranged to reduce the power level of the communication drive signal to a value for which the extracted power indication is indicative of the amount of power extracted by the power receiver being below a threshold, which in many cases may be close to zero (e.g. just exceed the power level for load modulation).

In some embodiments, the power receiver may in many embodiments be arranged to receive a voltage indication from the power receiver and the determiner 211 may determine the power extraction indication dependent on this (and thus the level controller 213 may set the level of the communication drive signal accordingly).

The voltage indication may for example be an indication of a voltage that results from induction (in the second communication coil 309) by the communication carrier signal. The voltage indication may be an indication of an induced voltage from the communication carrier signal, such as for example a voltage over the second communication coil 309 or the voltage at the output of the second power extraction circuit 311. For example, in some embodiments, the power receiver may transmit an indication of the voltage resulting from the communication carrier signal at the output of the second power extraction circuit 311. For example, the voltage (amplitude) at the anode of diode 601 may be measured and transmitted to the power receiver. The power transmitter may then be arranged to compare this to a desired level and set the level of the communication drive signal accordingly.

For example, it may be desired that the power supply circuit 313 generates a voltage of 12V and thus it is desired that the voltage over the capacitor 605 is around 12V during the duration of the communication time intervals. However, it may be desired that this is driven by the power extraction from power transfer signal rather than the communication carrier signal, and therefore the level of the communication drive signal may be set so that the voltage at the output of the second power extraction circuit 311/the anode of diode 601 is lower than this value (with some margin). This setting may be based on the power receiver measuring and reporting the value and the level controller 213 setting the level accordingly. For example, a predetermined function may be used to determine a relative change of the level of the communication drive signal from the measured value. E.g., if the measured voltage exceeds, say, 10V, the level may be reduced by a factor that increases for an increased voltage. If the measured voltage is less than, say, 8V, the level of the communication drive signal may be increased by a factor that increases for a decreased voltage. Thus, the system may seek to set the level of the communication carrier signal to result in an induced voltage at the anode of diode 601 of between 8V and 10V to provide a high level that is however sufficiently low for no power extraction to occur and for the diode 601 to remain in the non-conductive state for the entire communication time interval.

In some embodiments, the power receiver may alternatively or additionally provide a voltage indication indicative of an induced voltage from the communication carrier signal, such as the output from the first power extraction circuit/the voltage at the anode of diode 603. For example, the power receiver may provide an indication of such a voltage and the level controller 213 may set the level of the communication drive signal such that the voltage at the output of the second power extraction circuit 311 is less than this measured value. This may for example be done by using a predetermined function to set the level of the communication drive signal based only on the reported voltage at the output of the first power extraction circuit, or may in many embodiments be set by a comparison between a voltage reported for the communication carrier signal and for the power transfer signal (specifically the output of the first power extraction circuit or the second power extraction circuit 311). For example, if the measured voltage of the first power extraction circuit exceeds the measured voltage of the second power extraction circuit 311 by more than a given amount, the level of the communication drive signal may be increased. If it exceeds it by a smaller amount, the level of the communication drive signal may be unchanged, and if it exceeds it by an even smaller amount (or indeed the voltage of the second power extraction circuit 311 exceeds the voltage of the first power extraction circuit) the level of the communication drive signal may be reduced.

In some embodiments, a voltage indication of the voltage over a smoothing capacitor, such as specifically capacitor 605, may be reported and used to set the level of the communication drive signal. Specifically, the approach described for a voltage indication representing a voltage from the first power extraction circuit may also be used (mutatis mutandis) based on a voltage indication of the capacitor 605.

In some embodiments, the power receiver may be arranged to transmit a power extraction property indication that is indicative of a level of the communication carrier signal for which an amount of the power extracted from the communication carrier signal by the power receiver during at least part of the communication time intervals is below a given threshold.

For example, the power receiver may be arranged to transmit an indication of an acceptable/preferred magnetic field strength, such as a specific value in A/m units.

The power transmitter may in this case be arranged to determine a suitable level of the communication drive signal to provide the desired field strength. For example, the level controller 213 may include a predetermined function, e.g. stored as a look up table, which provides a specific level of the communication drive signal for a given field strength indication. Such a function may for example be determined by measurements during a design and manufacturing phase and may e.g. be based on assumed nominal conditions (such as an assumed positioning arrangement between the power transmitter and power receiver).

Such an approach may allow a low complexity yet in many scenarios still allow an efficient adaptation of the operation to provide improved performance.

In some embodiments, the power receiver may be arranged to transmit a power extraction property indication which is indicative of a power extraction circuit property of the power receiver. The power extraction property indication may in some embodiments indicate a property of the circuit for extracting power from the communication carrier signal (and/or from the power transfer signal). The level of the communication drive signal may then be set dependent on this indication.

As an example, the power extraction property indication may indicate that the power receiver has functionality for extracting power from the communication carrier signal, and thus that it includes power extraction circuitry arranged to extract power from the communication carrier signal. In this case, the power transmitter may proceed to adapt and set the level of the communication drive signal e.g. using any of the previously described approaches. If instead, a power extraction property indication is received indicating that the power receiver comprises no functionality for extracting power from the communication carrier signal, or indeed if no power extraction property indication is received providing any indication of the power extraction circuit, the power transmitter may instead be arranged to set the communication drive signal to a given predetermined fixed level.

As another example, the power extraction property indication may indicate that the power receiver includes power extraction circuitry for extracting power from the communication carrier signal, and which may further include whether the power receiver comprises a switch for disabling such power extraction circuitry from extracting power from the communication carrier signal during a power transfer phase. In such cases, the power transmitter may similarly be arranged to adapt the level of the communication drive signal as previously described if no such switch is included and otherwise the level may be set to a predetermined level.

It will be appreciated that the above description for clarity has described embodiments of the invention with reference to different functional circuits, units and processors. However, it will be apparent that any suitable distribution of functionality between different functional circuits, units or processors may be used without detracting from the invention. For example, functionality illustrated to be performed by separate processors or controllers may be performed by the same processor or controllers. Hence, references to specific functional units or circuits are only to be seen as references to suitable means for providing the described functionality rather than indicative of a strict logical or physical structure or organization.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units, circuits and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

It will be appreciated that the reference to a preferred value does not imply any limitation beyond it being the value determined in the foreign object detection initialization mode, i.e. it is preferred by virtue of it being determined in the adaptation process. The references to a preferred value could be substituted for references to e.g. a first value.

Furthermore, although individually listed, a plurality of means, elements, circuits or method steps may be implemented by e.g. a single circuit, unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus references to "a", "an", "first", "second" etc. do not preclude a plurality. Reference signs in the claims are provided merely as a clarifying example shall not be construed as limiting the scope of the claims in any way.

## Claims

1. A power transmitter (101) for wirelessly providing power to a power receiver (105) via an inductive power transfer signal, the power transmitter (101) comprising:
a power transfer coil (103) arranged to generate the power transfer signal;
a power transfer driver (201) arranged to generate a power transfer drive signal for the power transfer coil (103), the power transfer driver (201) being arranged to, during a power transfer phase, generate the power transfer drive signal to employ a repeating time frame comprising at least a power transfer time interval and a communication time interval, the power transfer driver (201) being arranged to generate the power transfer drive signal during the power transfer time intervals and to not generate the power transfer drive signal during communication time intervals;
a communication coil (207) arranged to generate a communication carrier signal,
a communication driver (209) arranged to generate a communication drive signal for the communication coil to generate the communication carrier signal;
a communication unit (205) arranged to communicate with the power receiver (105) using load modulation of the communication carrier signal;
a determiner (211) arranged to determine a power extraction indication being indicative of a power extraction property for extraction of power from the communication carrier signal by the power receiver during at least part of the communication time intervals; and
a level controller (211) arranged to control a level of the communication drive signal during communication time intervals in dependence on the power extraction indication.

2. The power transmitter of claim 1 the determiner (211) is arranged to set a first level for the communication drive signal during an initialization phase prior to the power transfer phase, the first level being set on the basis of at least one message received from the power receiver; and the determiner (211) is arranged to determine the power extraction indication as a function of the first level.

3. The power transmitter of any previous claim wherein the determiner (211) is arranged to set the level of the communication drive signal to be lower in the power transfer phase than in the initialization phase.

4. The power transmitter of any previous claim wherein the determiner (211) is arranged to measure a power of the communication drive signal during at least part of the communication time intervals and to determine the power extraction indication based on the measured power of the communication drive signal.

5. The power transmitter of any previous claim 4 wherein the level controller is arranged to constrain the level of the communication drive signal to be below a maximum value for which the measured power of the communication drive signal is below a threshold.

6. The power transmitter of claim 5 wherein the threshold exceeds a level of power extracted by load modulation by the power receiver.

7. The power transmitter of any previous claim wherein the communicator (207) is arranged to receive a power extraction property indication from the power receiver (105), the power extraction property indication being indicative of a property of power extraction from the communication carrier signal by the power receiver (105); and the determiner (211) is arranged to determine the power extraction indication from the power extraction property indication.

8. The power transmitter of claim 7 wherein the power extraction property indication is indicative of a measured power extracted from the communication carrier signal by the power receiver during at least part of the communication time intervals.

9. The power transmitter of claim 7 wherein the power extraction property indication is indicative of a level of the communication carrier signal for which an amount of power extracted from the communication carrier signal by the power receiver (105) during at least part of the communication time intervals is below a given threshold.

10. The power transmitter of claim 8 wherein the power extraction property indication is indicative of a power extraction circuit property of the power receiver.

11. The power transmitter of any previous claim wherein the communicator (207) is arranged to receive a voltage indication from the power receiver (105), the determiner (211) is arranged to determine the power extraction indication from the voltage indication, and the voltage indication is indicative of at least one voltage from the group of:
an induced voltage from the power transfer signal;
an induced voltage from the communication carrier signal; and
a capacitor voltage of a smoothing capacitor for a power supply circuit of the power receiver (105), the power supply circuit being arranged to be powered by power extracted from the power transfer signal or by power extracted from the communication carrier signal.

12. The power transmitter of any previous claim wherein the level controller is arranged to constrain the level of the communication drive signal to be below a threshold that is dependent on the power extraction indication.

13. A power receiver (105) for wirelessly receiving power from a power transmitter (101) via an electromagnetic power transfer signal, power transfer signal employing a repeating time frame comprising at least a power transfer time interval and a communication time interval, the power transfer signal being present during the power transfer time intervals and not present during communication time intervals, the power receiver (105) comprising:
a first power extraction circuit (301) arranged to extract power from the power transfer signal during power transfer time intervals of a power transfer phase;
a communication coil (309) for receiving a received communication carrier signal, the communication carrier signal being present during communication time intervals;
a second power extraction circuit (311) arranged to extract power from the communication carrier signal during at least a power transfer initialization phase;
a power supply (313) for generating a power supply for the power receiver (105), the power supply (313) being arranged to combine extracted power from the first power extraction circuit (301) and from the second power extraction circuit (311); and
a communication unit (307) arranged to communicate with the power transmitter (101) using modulation of the communication carrier signal during the communication time intervals; and wherein the communication unit (307) is arranged to transmit a power extraction property indication to the power transmitter (101), the power extraction property indication being indicative of a property of power extraction by the second power extraction circuit (311).

14. A method of operation for a power transmitter (101) wirelessly providing power to a power receiver (105) via an inductive power transfer signal, the method comprising:
a power transfer coil (103) generating the power transfer signal;
generating a power transfer drive signal for the power transfer coil (103) including during a power transfer phase, generating the power transfer drive signal to employ a repeating time frame comprising at least a power transfer time interval and a communication time interval, the power transfer drive signal being generated during the power transfer time intervals and not being generated during communication time intervals;
a communication coil (207) generating a communication carrier signal,
generate a communication drive signal for the communication coil to generate the communication carrier signal;
communicating with the power receiver (105) using load modulation of the communication carrier signal;
determining a power extraction indication being indicative of a power extraction property for extraction of power from the communication carrier signal by the power receiver during at least part of the communication time intervals; and
controlling a level of the communication drive signal during communication time intervals in dependence on the power extraction indication.

15. A method of operation for a power receiver (105) wirelessly receiving power from a power transmitter (101) via an electromagnetic power transfer signal, power transfer signal employing a repeating time frame comprising at least a power transfer time interval and a communication time interval, the power transfer signal being present during the power transfer time intervals and not present during communication time intervals, the method comprising:
a first power extraction circuit (301) extracting power from the power transfer signal during power transfer time intervals of a power transfer phase;
a communication coil (309) receiving a received communication carrier signal, the communication carrier signal being present during communication time intervals;
a second power extraction circuit (311) extracting power from the communication carrier signal during at least a power transfer initialization phase;
a power supply (313) generating a power supply for the power receiver (105), the power supply (313) combining e extracted power from the first power extraction circuit (301) and from the second power extraction circuit (311); and
a communication unit (307) communicating with the power transmitter (101) using modulation of the communication carrier signal during the communication time intervals; and
wherein the communication unit (307) transmits a power extraction property indication to the power transmitter (101), the power extraction property indication being indicative of a property of power extraction by the second power extraction circuit.
